# EUROPÄISCHE PATENTSCHRIFT

(11) **EP 3 097 360 B1**
(45) Veröffentlichungstag und Bekanntmachung des Hinweises auf die Patenterteilung: **30.10.2019**
(21) Anmeldenummer: 14818912.9
(22) Anmeldetag: 10.12.2014
(51) Int. Cl.: F24F 1/42, F25B 39/04, F24F 5/00, F28G 9/00, F28C 3/08, F28D 5/02, F28G 1/16

(54) **KÄLTEANLAGE MIT EINEM LUFTGEKÜHLTEN WÄRMETAUSCHER**
REFRIGERATION SYSTEM COMPRISING AN AIR-COOLED HEAT EXCHANGER
INSTALLATION FRIGORIFIQUE COMPRENANT UN ÉCHANGEUR DE CHALEUR REFROIDI PAR AIR

(30) Priorität: 24.01.2014 DE 102014201280
(43) Veröffentlichungstag der Anmeldung: 30.11.2016
(73) Patentinhaber: Gebrüder Lödige Maschinenbau GmbH, 33102 Paderborn (DE)
(72) Erfinder: REINACH, Harald, 33104 Paderborn (DE); SCHMIDTHALS, Cord, 34414 Warburg (DE)
(74) Vertreter: Gille Hrabal
(86) Internationale Anmeldenummer: PCT/EP2014/077100
(87) Internationale Veröffentlichungsnummer: WO 2015/110215

(56) Entgegenhaltungen:
- WO-A1-2013/020579
- US-A- 4 566 890
- US-A- 5 605 052
- US-A1- 2010 049 338
- US-B1- 6 318 108

## Beschreibung

Die Erfindung betrifft eine Kälteanlage mit einem luftgekühlten Wärmetauscher sowie eine Flüssigkeitsfreigabevorrichtung für einen luftgekühlten Wärmetauscher einer Kälteanlage.

Luftgekühlte Wärmetauscher werden häufig in gewerblichen Kälteanlagen und sonstigen Klima- und Kälteanlagen eingesetzt, bei denen die Kühlung mit Hilfe von Kondensation erfolgt. Wenn die Kälteanlage im Kühlbetrieb arbeitet, wird vom Kompressor gasförmiges Kältemittel angesaugt und verdichtet. Das verdichtete und dann erwärmte oder heiße Kältemittel wird vom Kompressor zum Verflüssiger im Außengerät gepumpt. Hier durchströmt das heiße Kältemittel ein mit Lamellen verbundenes Rohr und wird abgekühlt und somit verflüssigt, indem Umgebungsluft mithilfe eines Ventilators durch die Lamellen strömt. Das Kältemittel ist nun flüssig und steht unter hohem Druck. Es wird über die Verbindungsleitung vom Außengerät zum Verdampfer im Innengerät weitergeleitet, wo es verdampft, indem es der Raumluft Wärme entzieht, also den Raum oder Kühlmöbel kühlt.

Die Lamellen sind in der Regel zum Teil freistehend im Außenbereich angeordnet und dadurch ständig einer großen Verschmutzung ausgesetzt. Insbesondere durch ein Ansaugen der Umgebungsluft durch den Ventilator werden Schmutz und Pollen zwischen die Lamellen des Verflüssigers befördert und lagern sich dort ab. Mit steigender Verschmutzung sinkt der Wirkungsgrad der Anlage, also die Leistung der Kälteanlage. Ein erhöhter Energiebedarf und im Extremfall ein Ausfall der Kälteanlage ist die Folge.

Zudem reicht die Kühlleistung durch Wärmeabgabe an die Umgebungsluft bei besonders warmen Tagen auch bei sauberen Lamellen nicht aus, um die erforderliche Kühlleistung bereit zu stellen.

Die Druckschrift DE 103 44 653 A1 offenbart einen ventilatorbetriebenen, selbstreinigenden Luftkühler zur Kühlung der Luft in Räumen oder Kühlmöbeln bzw. Gefriertruhen mit einem in den Luftkühler integrierten Wärmeaustauscher. Die WO2013/020579A1 offenbart einen selbstreinigenden Wärmetauscher und die US4566890A einen selbstreinigenden Lamellenkühler.

Die vorgenannten, aus dem Stand der Technik bekannten Merkmale können einzeln oder in beliebiger Kombination mit einem der nachfolgend beschriebenen erfindungsgemäßen Gegenstände kombiniert werden.

Es ist Aufgabe der Erfindung, eine weiterentwickelte Kälteanlage und Flüssigkeitsfreigabevorrichtung bereitzustellen, um oben beschriebene Probleme zu lösen.

Zur Lösung der Aufgabe dienen eine Flüssigkeitsfreigabevorrichtung für einen luftgekühlten Wärmetauscher nach dem Hauptanspruch sowie eine Kälteanlage und ein Verfahren nach den Nebenansprüchen. Vorteilhafte Ausführungsformen ergeben sich aus den Unteransprüchen.

In einer Ausführungsform kann bei einer Kälteanlage mit einem luftgekühlten Wärmetauscher, insbesondere Verflüssiger, welcher ein Kältemittelrohr für ein Durchströmen eines Kältemittels und mit dem Kältemittelrohr verbundene Lamellen umfasst, eine erfindungsgemäße Flüssigkeitsfreigabevorrichtung vorhanden sein. Die Flüssigkeitsfreigabevorrichtung umfasst mindestens zwei Austrittsöffnungen zur Freisetzung einer Flüssigkeit, insbesondere Wasser, in Richtung der Lamellen des Wärmetauschers. Eine Flüssigkeitszufuhr zu jeder der mindestens zwei Austrittsöffnungen mittels Austrittventile abstellbar.

Die Flüssigkeitsfreigabevorrichtung sieht also mindestens zwei Flüssigkeitsaustritte durch Öffnungen hindurch vor, wobei der Austritt von Flüssigkeit mittels Austrittventile separat abstellbar ist.

Ein abstellbares Ventil im Sinne der vorliegenden Anmeldung ist in einer besonders einfachen und zuverlässig funktionierenden Ausführungsform ein Ventil, welches lediglich die Stellungen "geöffnet" und "geschlossen" einnehmen kann und keine etwa kontinuierlich einstellbare Durchflussöffnungsgröße vorsieht.

Durch eine Kälteanlage mit einer Flüssigkeitsfreigabevorrichtung mit mindestens zwei Flüssigkeitsaustritten und eine zu jedem Flüssigkeitsaustritt abstellbare Flüssigkeitszufuhr kann besonders einfach, mit besonders wenigen Teilen und mit besonders geringem Herstellungs- und Steuerungsaufwand nicht nur gereinigt, sondern auch zusätzlich gekühlt werden.

Der Erfindung liegt die Erkenntnis zugrunde, dass ein Reinigen der Lamellen von den Wirkungsgrad der Anlage reduzierender Verschmutzung ein Spritzen mit Flüssigkeit unter hohem Druck einfach durchgeführt werden kann. Für ein zusätzliches Kühlen der Lamellen, um bei erhöhter Umgebungslufttemperatur eine erforderliche Kühlleistung der Anlage zu ermöglichen, ist hingegen ein Sprühen mit Flüssigkeit unter geringem Druck hinreichend, um ein Benetzen der Lamellenoberfläche mit Flüssigkeit zu bewirken.

Durch eine Kälteanlage mit einer Flüssigkeitsfreigabevorrichtung mit mindestens zwei Flüssigkeitsaustritten und eine zu jedem Flüssigkeitsaustritt abstellbare Flüssigkeitszufuhr kann mit einem besonders einfachen Aufbau und durch dieselben Flüssigkeitsaustritte sowohl mit hohem Flüssigkeitsdruck gereinigt als auch mit niedrigem Flüssigkeitsdruck gekühlt werden und zwar lediglich durch geeignetes Öffnen und Schließen von Austrittsventilen, insbesondere indem die Anzahl der gleichzeitig geöffneten Austrittsventile angepasst wird.

In einer Ausführungsform ist eine schwenkbare Flüssigkeitszuführung mit Flüssigkeitsaustritt vorgesehen (nachfolgend auch schwenkbarer Flüssigkeitsaustritt genannt), die so beschaffen ist, dass der schwenkbare Flüssigkeitsaustritt eine Schwenkbewegung ausführen kann und/oder ein zumindest überwiegender Teil einer dem Flüssigkeitsaustritt bzw. den Flüssigkeitsaustritten zugewandten Lamellenfläche der Lamellen des Wärmetauschers durch die Schwenkbewegung übergedeckt wird.

Mit Überdecken einer Lamellenfläche ist gemeint, dass der schwenkbare Flüssigkeitsaustritt durch eine Schwenkbewegung über oder unter den Lamellen bewegt werden kann und zwar insbesondere derart, dass dadurch zumindest ein wesentlicher Teil der Unterseite mit Flüssigkeit besprüht werden kann.

Durch einen schwenkbaren Flüssigkeitsaustritt kann besonders schnell, effizient und effektiv ein Wärmetauscher gereinigt oder vor allem an heißen Tagen zusätzlich gekühlt werden.

Besonders umfangreich kann gereinigt oder vor allem an heißen Tagen zusätzlich gekühlt werden, wenn ein zumindest überwiegender Teil einer den Flüssigkeitsaustritten zugewandten Lamellenfläche der Lamellen des Wärmetauschers durch die Schwenkbewegung übergedeckt wird, also ein überwiegender Teil der Lamellenfläche oder die gesamte Lamellenfläche überdeckt wird. Das Erfassen eines zumindest wesentlichen Teils der Unterseite ist mit dem Vorteil verbunden, dass der Bereich gereinigt wird, der maßgeblich von einer Verschmutzung betroffen ist. Der technische Aufwand kann so gering gehalten werden.

Vorzugsweise ist der schwenkbare Flüssigkeitsaustritt in Form eines Schwenkrohrs ausgestaltet, insbesondere mit mindestens einer Austrittsöffnung, vorzugsweise mit mindestens zwei Austrittsöffnungen, besonders bevorzugt mit genau zwei Austrittsöffnungen.

Insbesondere hat sich bei Versuchen gezeigt, dass bei der Verwendung von handelsüblichen Fächerdüsen mit einem Öffnungswinkel von 60° zwei Düsen oder Austrittsöffnungen ausreichend sind.

Ein Schwenkrohr ist eine besonders einfache Art der Realisierung eines schwenkbaren Flüssigkeitsaustritts.

In einer Ausführungsform sind sämtliche Flüssigkeitsaustritte an dieselbe Flüssigkeitszufuhr angeschlossen.

Flüssigkeitszufuhr meint eine Zuleitung von Flüssigkeit, z.B. Wasserzuleitung, mit einem im wesentlichen konstanten Druck oder zumindest mit einem Druck, der während des Betriebs der Kälteanlage bzw. Flüssigkeitsfreigabevorrichtung nicht durch die Kälteanlage oder Flüssigkeitsfreigabevorrichtung für ein Steuern oder Regeln gezielt beeinflusst, verändert oder optimiert wird.

Dadurch, dass sämtliche Flüssigkeitsaustritte an dieselbe Flüssigkeitszufuhr angeschlossen sind, kann mit einem besonders einfachen Aufbau sowohl gereinigt als auch zusätzlich gekühlt werden.

Insbesondere ist die Anzahl sämtlicher an dieselbe Flüssigkeitszufuhr angeschlossene Flüssigkeitsaustritte auf vorzugsweise maximal 18 Flüssigkeitsaustritte pro Flüssigkeitszufuhr, bevorzugt 12 Flüssigkeitsaustritte, besonders bevorzugt 6 Flüssigkeitsaustritte pro Flüssigkeitszufuhr beschränkt.

Insbesondere ist die Anzahl der gleichzeitig geöffneten Flüssigkeitsaustritte beschränkt, vorzugsweise durch die Steuerung beschränkt.

Dadurch können je nach Größe der Lamellenfläche beliebig viele Flüssigkeitsaustritte vorgesehen werden und dennoch weiterhin eine besonders große Reinigungsqualität und zusätzliche Kühleffizienz bewirkt werden.

Die Erfindung betrifft eine Flüssigkeitsfreigabevorrichtung für einen luftgekühlten Wärmetauscher, insbesondere Verflüssiger, einer Kälteanlage, welche eine Steuerungseinrichtung umfasst, die so eingerichtet ist, dass ein erster Betriebsmodus mit einer kleinen Anzahl gleichzeitig geöffneter Austrittsventile und ein zweiter Betriebsmodus mit einer großen Anzahl gleichzeitig geöffneter Austrittsventile vorgesehen ist, vorzugsweise mit einem Verhältnis der Anzahl der gleichzeitig geöffneten Austrittsventile des ersten Betriebsmodus zum zweiten Betriebsmodus zwischen 1:8 bis 3:4, bevorzugt 1:6 bis 2:3, besonders bevorzugt 1:4 bis 1:2.

Durch eine Flüssigkeitsfreigabevorrichtung mit einem oben beschriebenen ersten und zweiten Betriebsmodus kann besonders einfach, mit besonders wenigen Teilen und mit besonders geringem Herstellungs- und Steuerungsaufwand nicht nur gereinigt, sondern auch zusätzlich bei Bedarf gekühlt werden.

Insbesondere sieht die Flüssigkeitsfreigabevorrichtung mindestens eine zusätzliche Stellung der Austrittsventile vor, in der sämtliche Austrittsventile gleichzeitige geöffnet oder geschlossen sind. Hierdurch wird eine besonders große Flexibilität ermöglicht, um beispielsweise bei Frostgefahr vollständig entleeren zu können. Soll gekühlt werden, so sind in der Regel einige Austrittsventile geschlossen. Soll gereinigt
werden, so werden weitere Austrittsventile geschlossen. Die Austrittsventile werden so geöffnet sowie geschlossen, dass gewünschte Bereiche von der Flüssigkeit erfasst werden. Für ein Kühlen werden vorzugsweise zu kühlende Bereiche nacheinander mit Flüssigkeit benetzt. Dies ermöglicht ein großflächiges Kühlen, ohne dafür Flüssigkeit durch eine einzige gemeinsame Zuleitung mit übermäßig hohem Wasserdruck zuführen zu müssen.

Weitere vorteilhafte Ausführungsformen der Erfindung sind Gegenstand der Unteransprüche.

Die Erfindung wird nachfolgend anhand eines in der Zeichnung schematisch dargestellten Ausführungsbeispiels einer Kälteanlage bzw. einer Flüssigkeitsfreigabevorrichtung für eine Kälteanlage näher erläutert und mit Bezug zu den Zeichnungen die weiteren vorteilhaften Ausführungsformen sowie zusätzliche vorteilhafte Ausgestaltungen näher beschrieben.

Die in der Beschreibungseinleitung, den Ausführungsformen, den Ausführungsbeispielen, der Figurenbeschreibung und den Ansprüchen genannten Merkmale sind sowohl einzeln als auch in beliebiger Weise miteinander kombiniert einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

Es zeigt:

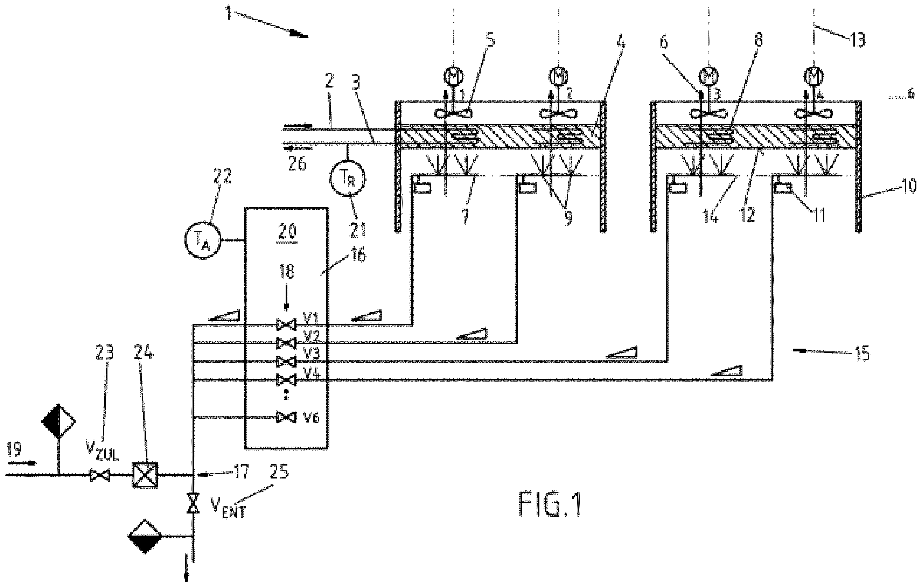

- Figur 1:: Schematische Darstellung eines Verflüssigers und einer Flüssigkeitsfreigabevorrichtung für eine Kälteanlage

Die Figur 1 zeigt einen luftgekühlten Verflüssiger 1 einer gewerblichen Kälteanlage, wobei der Verflüssiger 1 alternativ zur dargestellten Variante insbesondere auch als V-Block Verflüssiger ausgestaltet sein kann. Der Verflüssiger 1 ist im Außenbereich installiert und umfasst zwei getrennte Wärmetauscher-Einheiten mit jeweils zwei nebeneinander angeordneten Ventilatoren 5, insbesondere Axialventilatoren, welche die Umgebungsluft durch axial unterhalb der Ventilatoren 5 angeordnete Lamellen 4 saugt. Die untere Seite der Lamellen 4 bildet eine Lamellenfläche bzw. Unterseite 12, die den Umgebungsbedingungen ausgesetzt ist. Jeder Ventilator 5 bewirkt einen Luftstrom 6 der Umgebungsluft, welcher an der Lamellenfläche 12 ins Innere der Lamellen 4 eintritt und oberhalb des Ventilators 5 wieder in die Umgebung austritt. Zwischen Ventilator 5 und Lamellenfläche 12 ist ein Kältemittelrohr 8 angeordnet, welches mit den Lamellen 4 verbunden ist und mit Kältemittel 26 durchströmt wird. Der Austausch des Kältemittels 26 mit dem im Innenbereich liegenden Teil der Kälteanlage erfolgt über ein Kältemittelzulaufrohr 2 und ein Kältemittelrücklaufrohr 3, die mit dem Kältemittelrohr 8 verbunden sind.

Die Figur 1 zeigt ferner eine Flüssigkeitsfreigabevorrichtung 15 mit einer Flüssigkeitszufuhr 19, wobei die durch die Flüssigkeitszufuhr bereitgestellte Flüssigkeit, vorzugsweise Wasser, bevorzugt partikelfreies Wasser, mit gegebenen Bereitstellungsdruck aus dem dahinterliegenden Versorgungssystems, vorzugsweise mindestens 4 bar zum Beispiel aus einer üblichen Wasserleitung wie zum Beispiel Trinkwasserleitung oder Brauchwasserleitung, zunächst auf ein Zulaufventil 23 stößt und bei geöffneten Zulaufventil 23 eine Aqua-Stop-Einrichtung 24 passiert und schließlich zu einer T-Kreuzung 17 gelangt. Der eine Arm der T-Kreuzung 17 führt zu einem Entleerungsventil 25. Der andere Arm der T-Kreuzung 17 führt zu einer Aufgabelung des Rohrleitungssystems in sechs einzelne Leitungen.

Die sechs einzelnen Leitungen sind über jeweils ein Austrittsventil 18 mit einem jeweils einem Schwenkrohr 7 als schwenkbarer Flüssigkeitsaustritt 7 verbunden.

In einer Ausgestaltung ist jedes Schwenkrohr 7 mit zwei Düsen 9 als Austrittsöffnung 9 ausgestattet. Hierdurch kann ein besonders gleichmäßiges Reinigen und zusätzliches Kühlen der Lamellen 4 erzielt werden. Es können aber auch mehr als zwei Düsen 9 pro Schwenkrohr vorhanden sein.

In einer Ausgestaltung sind die Düsen 9 der Lamellenfläche 12 zugewandt. Ein besonders effektives Reinigen und zusätzliches Kühlen der Lamellen 4 kann so erzielt werden, da in erster Linie diese Unterseite maßgeblich von Verunreinigungen betroffen ist.

In einer vorteilhaften Ausgestaltung ist ein schwenkbarer Flüssigkeitsaustritt 7 bzw. Schwenkrohr 7 an einer Ventilator 5 abgewandten Seite der Lamellen 4 oder unterhalb der Lamellen 4 angeordnet.

Durch ein Anordnen eines Flüssigkeitsaustritts 7 an der Ventilator 5 abgewandten Seite der Lamellen 4 kann besonders effektiv und effizient Schmutz entfernt werden. Hier liegt in der Regel die größte Verschmutzung vor.

Durch ein Anordnen eines Flüssigkeitsaustritts 7 unterhalb der Lamellen 4 wird ermöglicht, dass sich durch die Flüssigkeit der Schmutz verlumpt, durch die hohe Auftreffgeschwindigkeit der Flüssigkeit, insbesondere Wasser, die Klumpen von den Lamellen 4 gelöst werden und dann durch die Gravitation herunterfallen. Der Schmutz kann so nicht tiefer in die Lamellen 4 eindringt.

In einer Ausgestaltung ist ein Flüssigkeitsaustritt 7 durch einen Schwenkantrieb 11 angetrieben. Ein automatisches Reinigen und zusätzliches Kühlen einer besonders großen Lamellenfläche 12 wird so ermöglicht.

In einer Ausgestaltung ist der Schwenkantrieb 11 so beschaffen, dass der Schwenkantrieb 11 allein durch den Fluss der Flüssigkeit angetrieben werden kann. Hierdurch kann ein besonders geringer Energieverbrauch der Kälteanlage ermöglicht werden.
In einer Ausgestaltung ist ein Flüssigkeitsaustritt 7 auf einem Rahmen aus Profilblechen montiert und mit Schrauben an Standbeinen 10 des Verflüssigers 1 befestig.

In einer vorteilhaften Ausgestaltung ist ein Flüssigkeitsaustritt 7 in einem Abstand von 100 mm bis 1000 mm, vorzugsweise 200 mm bis 800 mm, besonders bevorzugt 400 mm bis 600 mm, unterhalb der Lamellenfläche 12 angeordnet. Hierdurch kann besonders effektiv und effizient gereinigt und/oder zusätzlich gekühlt werden.

In einer Ausgestaltung ist eine Schwenkachse 14 eines Flüssigkeitsaustritts 7 senkrecht zu einer Ventilatorachse 13 angeordnet. Dies ermöglicht auf besonders einfache Weise, insbesondere mit nur einer Drehachse, eine vollständige Überdeckung der Lamellenfläche 12. Zudem kann somit der Herstellungsaufwand reduziert werden.

In einer Ausgestaltung sind zwei Drehlager (nicht dargestellt) zur Lagerung des schwenkbaren Flüssigkeitsaustritts 7 bzw. Schwenkrohrs 7 vorgesehen. Hierdurch werden eine besonders stabile Schwenkbewegung und eine große Robustheit des Systems ermöglicht.

Insbesondere wird ein Drehlager durch einen Schwenkantrieb 11 bereitgestellt. Hierdurch können Teile eingespart werden und die Komplexität des Systems reduziert werden.

Insbesondere ist ein Drehlager als ein Y-förmiges Auflager ausgeformt. Hierdurch kann der Herstellungsaufwand und Kosten reduziert werden.

In einer Ausgestaltung ist der Rahmen für die Aufhängung bzw. Montage eines Flüssigkeitsaustritts 7 kürzer als der Flüssigkeitsaustritt 7. Der Flüssigkeitsaustritt 7 erstreckt sich also über den Rahmen hinaus, insbesondere über ein Auflager an einem Ende des Rahmens. Hierdurch kann Material und Raumbedarf für den Rahmen und die Montage reduziert werden.

In einer Ausgestaltung entspricht eine Schwenkbewegung einer Drehbewegung insbesondere um eine Schwenkachse 14. Hierdurch kann auf besonders einfache Weise ein besonders gleichmäßiges Reinigen und zusätzliches Kühlen der Lamellen 4 erzielt werden. Ferner kann so ein energieeffizientes Reinigen und zusätzliches Kühlen der Lamellen 4 ermöglicht werden.

Alternativ sieht eine vorteilhafte Variante (nicht dargestellt) vor, eine Schwenkachse 14 eines Flüssigkeitsaustritts 7 parallel zu einer Ventilatorachse 13 anzuordnen. Hierdurch kann ein optimierter Strahlwinkel zur Lamellenfläche 12 ermöglicht werden. Je nach Ausdehnung und Form der Lamellenfläche 12 kann jedoch im Einzelfall bei dieser alternativen Variante ggf. ein erhöhter Aufwand für ein vollständiges Überdecken der Lamellenfläche 12 erforderlich sein. Insbesondere kann sich bei der vorteilhaften Variante (nicht dargestellt) der Flüssigkeitsaustritt 7 im rechten Winkel zur Schwenkachse 14 erstrecken oder eine Schwenkbewegung des Flüssigkeitsaustritts 7 kann radial, also im rechten Winkel, zur Schwenkachse 14 verlaufen. Hierdurch kann ein besonders gleichmäßiges Reinigen und zusätzliches Kühlen der Lamellen 4 erzielt werden.

Insbesondere kann bei der vorteilhaften Variante (nicht dargestellt) eine Schwenkachse 14 außermittig zum Flüssigkeitsaustritt 7 angeordnet sein, vorzugsweise am Ende des Flüssigkeitsaustritts 7. So kann mit besonders geringem Aufwand und wenigen Teilen der Flüssigkeitsaustritt 7 mit der Flüssigkeitszufuhr 19 verbunden werden. Zudem wird so ein Überdecken eines besonders großen Teils der Lamellenfläche bzw. Unterseite 12 durch die Bewegungsbahn bzw. Schwenkbewegungen des schwenkbaren Flüssigkeitsaustritts 7 ermöglicht.

Insbesondere kann bei der vorteilhaften Variante (nicht dargestellt) die Schwenkachse 14 außermittig zu einer Flüssigkeitsaustritt 7 zugewandten Lamellenfläche 12 angeordnet sein, vorzugsweise in einem Randbereich der Lamellenfläche 12. Hierdurch kann durch die so ermöglichte Schwenkbewegung ein Überdecken eines besonders großen Teils der Lamellenfläche 12 durch die Bewegungsbahn des Flüssigkeitsaustritts 7 erzielt werden.

In einer Ausgestaltung weist die Flüssigkeitsfreigabevorrichtung 15 eine Steuerungseinrichtung 20 auf, die so eingerichtet ist, dass ein erster Betriebsmodus mit nur einem gleichzeitig geöffneten Austrittsventil 18 und ein zweiter Betriebsmodus mit maximal drei gleichzeitig geöffneten Austrittsventilen 18 vorgesehen sind.

Angesichts des gegeben Leitungsdrucks der Flüssigkeitszufuhr 19 seitens des Versorgungssystems kann im ersten Betriebsmodus die Flüssigkeit mit hohem Druck und im zweiten Betriebsmodus mit niedrigem Druck durch die Austrittsöffnungen 9 bzw. Düsen 9 freigesetzt werden. Durch eine Stellung der Austrittsventile 18 gemäß erstem Betriebsmodus können so die Lamellen 4 durch einen Flüssigkeitsstrahl besonders gründlich gereinigt werden und durch eine Stellung der Austrittsventile 18 gemäß zweitem Betriebsmodus durch ein Besprühen und Benetzen besonders gleichmäßig und effektiv zusätzlich gekühlt werden. Insbesondere bei durchgängig periodisch abwechselnder Flüssigkeitsfreigabe durch die Flüssigkeitsaustritte 7 über einen für eine zusätzliche Kühlung erforderlichen Zeitraum wird eine besonders große zusätzliche Kühlleistung durch das gleichzeitige Öffnen einer großen Anzahl von Flüssigkeitsaustritten gemäß dem zweiten Betriebsmodus erzielt. Es werden aber dann grundsätzlich nicht sämtliche Austrittsventile gleichzeitig geöffnet.

In einer Ausgestaltung weist die Flüssigkeitsfreigabevorrichtung 15 eine Steuerungseinrichtung 20 auf, die so eingerichtet ist, dass durch ein Aktivieren des ersten oder zweiten Betriebsmodus ein Austrittsventil 18 nur für eine vorgegebene und damit bestimmte Zeitdauer, die grundsätzlich für den ersten und zweiten Betriebsmodus variieren kann, eine Stellung gemäß dem ersten bzw. zweiten Betriebsmodus einnimmt.

Durch die vorgegebene bzw. bestimmte Zeitdauer kann ein Reinigen und Kühlen besonders einfach gesteuert werden. Ferner wird so ein effizientes Reinigen bei gleichzeitig hoher Kühlleistung der Kälteanlage ermöglicht, die sonst für ein Reinigen längere Zeit ausgeschaltet werden müsste.

In der Regel wird anschließend entweder ein anderer Betriebsmodus aktiviert oder sämtliche Austrittsventile 18 geschlossen. Auch hierdurch kann ein Reinigen und Kühlen besonders einfach gesteuert werden.

In einer vorteilhaften Ausgestaltung weist die Flüssigkeitsfreigabevorrichtung 15 eine Steuerungseinrichtung 20 auf, die so eingerichtet ist, dass im ersten Betriebsmodus und zweiten Betriebsmodus sämtliche Austrittsventile 18 gleichzeitig, zum Teil gleichzeitig und/oder nacheinander jeweils für eine bestimmte Zeitdauer geöffnet werden.

Insbesondere entspricht diese bestimmte Zeitdauer einer einfachen oder vielfachen einer Schwenkzeit zum Vorschwenken und Zurückschwenken eines Flüssigkeitsaustritts 7.

Hierdurch kann mit besonders wenigen Teilen und mit besonders geringem Herstellungs- und Steuerungsaufwand nicht nur gereinigt, sondern auch zusätzlich gekühlt werden.

In einem Ausführungsbeispiel entspricht diese bestimmte Zeitdauer genau oder zumindest im Wesentlichen genau einer Schwenkzeit, d.h. die Zeit, in der das Schwenkrohr 7 einmal unter den Lamellen 4 eine Schwenkbewegung vollführt und in seine Ausgangsstellung zurückschwenkt. Im ersten Betriebsmodus wird durch jedes Schwenkrohr 7 nacheinander für die Dauer einer Schwenkzeit Flüssigkeit freigegeben. D.h. innerhalb eines Zeitraums von sechs Schwenkzeiten sind sämtliche Lamellenoberflächen 4 gereinigt. Im zweiten Betriebsmodus wird für den Zeitraum einer Schwenkzeit Flüssigkeit durch die Düsen 9 von drei Schenkrohren 7 gleichzeitig abgegeben und anschließend Flüssigkeit durch die restlichen drei Schenkrohre 7 gleichzeitig während einer Schwenkzeit freigegeben.

Die Flüssigkeitszufuhr 19 ist durch ein Zulaufventil 23 abstellbar und ein Entleerungsventil 25 zum Entleeren eines Rohrleitungssystems kann wie das Zulaufventil 23 lediglich die Stellungen "geöffnet" und "geschlossen" einnehmen.

In einer Ausgestaltung ist das gesamte Rohrleitungssystem, welches sich vom Zulaufventil 23 bis zum Entleerungsventil 25 erstreckt und sämtliche Flüssigkeitsaustritte 19 einschließt, zum Entleerungsventil 25 hin fallend verlegt. Das heißt, dass bei Schließen des Zulaufventils 23 und Öffnen des Entleerungsventils 25 die Flüssigkeit durch die Gravitationskraft im Wesentlichen komplett vom Rohrleitungssystem durch das Entleerungsventil 25 abfließen kann.

Hierdurch kann bei geringen Temperaturen eine Beschädigung der Flüssigkeitsfreigabevorrichtung 15 vermieden werden.

In einer Ausgestaltung weist die Flüssigkeitsfreigabevorrichtung 15 eine Steuerungseinrichtung 20 auf, die so eingerichtet ist, dass ein Flüssigkeitsaustrittsventil 18, ein Zulaufventil 23 zum Abstellen der Flüssigkeitszufuhr 19 und/oder ein Entleerungsventil 25 zum Entleeren der insbesondere im Wesentlichen gesamten Flüssigkeit des Leitungssystems zwischen Zulaufventil und Entleerungsventil separat geöffnet oder geschlossen werden können. Hierdurch kann durch eine einfache Steuerung ein besonders hoher Automatisierungsgrad für eine Reihe von Funktionalitäten ermöglichen werden.

Vorzugsweise weist die Flüssigkeitsfreigabevorrichtung 15 eine Steuerungseinrichtung 20 auf, die so eingerichtet ist, dass das Flüssigkeitsaustrittsventil 18, das Zulaufventil 23 und/oder das Entleerungsventil 25 separat in Abhängigkeit von einer Zeitgröße und/oder einer Messgröße geöffnet oder geschlossen werden können, wobei vorzugsweise Zeitpunkt bzw. Zeitabstand bzw. Messgrößenschwellwert mithilfe einer Benutzerschnittstelle einer Steuerung 20 einstellbar sind.

Insbesondere ist dazu ein Zeitmessgerät für ein Ermitteln eines Zeitpunkts, ausgedrückt in Kalenderjahr, Kalendermonat, Kalendertag, Stunden, Minuten und Sekunden ab Mitternacht eines Tages im Kalendersystem sowie für ein Ermitteln einer Zeitspanne vorgesehen.

Eine derart eingerichtete Steuerungseinrichtung 20 ermöglicht einen besonders hohen Automatisierungsgrad für ein bedarfsorientiertes Reinigen an festgelegten Zeitpunkten und/oder in einem regelmäßigen Zeitabstand.

Insbesondere wird als ein solcher regelmäßiger Zeitabstand bzw. als Reinigungsintervalls zwischen 1 Tag bis 30 Tage, vorzugsweise 2 bis 14 Tage vorgesehen. Ein besonders hoher Wirkungsgrad der Kälteanlage kann so erzielt werden.

In einer vorteilhaften Ausgestaltung ist ein Kältemittelrücklauftemperatursensor 21 am Kältemittelrücklaufrohr 3 für ein Ermitteln einer Kältemittelrücklauftemperatur als Messgröße und/oder einen Außentemperatursensor 22 - insbesondere an oder in der Nähe eines Steuerschranks 16 - für ein Ermitteln einer Außentemperatur als Messgröße vorgesehen.

Ein besonders hoher Automatisierungsgrad für ein bedarfsorientiertes zusätzliches Kühlen kann so ermöglicht werden.

In einer vorteilhaften Ausgestaltung weist die Flüssigkeitsfreigabevorrichtung 15 eine Steuerungseinrichtung 20 auf, die so eingerichtet ist, dass bei Überschreiten einer bestimmten Kältemittelrücklauftemperatur und/oder bei Überschreiten einer bestimmten Außentemperatur, vorzugsweise größer als 28°C, bevorzugt größer als 32°C, automatisch der zweite Betriebsmodus aktiviert wird.

Mit bestimmter Kältemittelrücklauftemperatur ist insbesondere ein variabler Parameterwert gemeint, der werksseitig voreingestellt und/oder durch Benutzerschnittstelle der Steuerungseinrichtung 20 eingestellt bzw. geändert werden kann.

Durch eine Steuerungseinrichtung 20, die so eingerichtet ist, dass bei Überschreiten einer bzw. der oben beschriebenen Kältemittelrücklauftemperaturwerte der zweite Betriebsmodus aktiviert wird, kann ein besonders zuverlässiges, automatisches zusätzliches Kühlen ermöglicht werden.

In einer Ausgestaltung wird solange zusätzlich gekühlt, bis die oben beschriebe Bedingung für ein Aktivieren des zweiten Betriebsmodus nicht mehr erfüllt ist.

In einer vorteilhaften Ausgestaltung weist die Flüssigkeitsfreigabevorrichtung 15 eine Steuerungseinrichtung 20 auf, die so eingerichtet ist, dass bei einem durchgängigen Unterschreiten einer bestimmten Außentemperatur, vorzugsweise kleiner als 5°C, bevorzugt kleiner als 4°C, besonders bevorzugter kleiner als 3°C, über einen Zeitraum von vorzugsweise 5 Tagen, bevorzugt 3 Tage, besonders bevorzugt 48 Stunden, das Zuleitungsventil 23 geschlossen und/oder das Entleerungsventil 25 geöffnet wird

Durch eine Steuerungseinrichtung 20, die so eingerichtet ist, dass bei Unterschreiten einer bzw. der oben beschriebenen Kältemittelrücklauftemperatur für oben bezeichneten Zeitraum das Zuleitungsventil 23 geschlossen und/oder das Entleerungsventil 25 geöffnet wird, kann eine frostbedingte Beschädigung der Anlage besonders zuverlässig automatisch entgegengewirkt werden.

In einer vorteilhaften Ausgestaltung weist die Flüssigkeitsfreigabevorrichtung 15 eine Steuerungseinrichtung 20 auf, die so eingerichtet ist, dass bei geschlossenem Zuleitungsventil 23 und/oder geöffneten Entleerungsventil 25 ein Überschreiten einer bestimmten Außentemperatur, vorzugsweise größer als 6°C, bevorzugt größer als 8°C, besonders bevorzugt größer als 10°C, über einen Zeitraum von vorzugsweise 5 Tagen, bevorzugt 3 Tage, besonders bevorzugt 48 Stunden, das Entleerungsventil 25 automatisch geschlossen und/oder das Zuleitungsventil 23 automatisch geöffnet wird.

Durch eine Steuerungseinrichtung 20, die so eingerichtet ist, dass bei Überschreiten einer bzw. der oben beschriebenen Kältemittelrücklauftemperatur für oben bezeichneten Zeitraum das Entleerungsventil 25 automatisch geschlossen und/oder das Zuleitungsventil 23 geöffnet wird, können frostbedingte Unterbrechungen des Reinigungsbetriebs besonders einfach und mit geringem Aufwand minimiert werden.

In einer Ausgestaltung wird das Zuleitungsventil 23 geschlossen und das Entleerungsventil 25 geöffnet, sobald für 48 Stunden die Außentemperatur 3°C unterschreitet. Die gesamte Flüssigkeit fließt dann durch das fallend verlegte Rohrsystem ab. Sobald dann die Außentemperatur für 48 Stunden über 10°C liegt, wird das Entleerungsventil 25 wieder geschlossen und das Zuleitungsventil 23 zum Befüllen des Rohrleitungssystems geöffnet.

In einer Ausgestaltung weist die Flüssigkeitsfreigabevorrichtung 15 eine Steuerungseinrichtung 20 auf, die so eingerichtet ist, dass bei einer Aktivierung des zweiten Betriebsmodus stets zunächst insbesondere automatisch der erste Betriebsmodus aktiviert wird.

Dadurch, dass vor Aktivierung des zweiten Betriebsmodus stets zunächst der erste Betriebsmodus aktiviert wird, kann bewirkt werden, dass vor einem zusätzlichen Kühlen immer ein Reinigen vorgeschaltet wird. Ein zusätzliches Kühlen ohne vorgeschaltetes Reinigen würde dazu führen, dass durch die gesprühte Flüssigkeit Schmutz gelöst und aufgrund des durch den Ventilator 5 erzeugten Luftstroms 6 in die Lamellen 4 reingesaugt und sich dort festsetzten würde. Durch das vorgeschaltete Reinigen kann dem auf besonders einfache Weise und mit geringem Aufwand entgegengewirkt werden.

In einer alternativen Variante (nicht dargestellt) weist die Flüssigkeitsfreigabevorrichtung 15 eine Steuerungseinrichtung 20 auf, die so eingerichtet ist, dass bei einem Aktivieren des ersten Betriebsmodus ein Ventilator 5 des Wärmetauschers abgeschaltet wird. Dadurch, dass bei einem Aktivieren des ersten Betriebsmodus ein Ventilator 5 des Wärmetauschers abgeschaltet wird bzw. insbesondere zumindest während einer Stellung der Austrittsventile 18 gemäß erstem Betriebsmodus abgeschaltet bleibt, kann bei dieser Variante auf besonders einfache Weise verhindert werden, dass bei einem Reinigen Schutz in die Lamellen 4 gesaugt wird.

Insbesondere weist bei der alternativen Variante (nicht dargestellt) die Flüssigkeitsfreigabevorrichtung 15 eine Steuerungseinrichtung 20 auf, die so eingerichtet ist, dass bei Aktivieren des zweiten Betriebsmodus ein Ventilator 5 in Betrieb bleibt oder angeschaltet wird. Hierdurch kann bei dieser Variante eine besonders große Kühlleistung der Kälteanlage auch für die Dauer eines zusätzlichen Kühlens ermöglicht werden.

In einer Ausgestaltung weist die Flüssigkeitsfreigabevorrichtung 15 eine Steuerungseinrichtung 20 auf, die so eingerichtet ist, dass während des Betriebs im zweiten Betriebsmodus oder bei einer Stellung der Austrittsventile 18 gemäß dem zweiten Betriebsmodus ein Erfüllt-sein einer Bedingung zum Aktivieren des ersten Betriebsmodus nicht zu einer Aktivierung des ersten Betriebsmodus führt.

Dieser Ausgestaltung liegt der Gedanke zugrunde, dass ein zusätzliches Kühlen grundsätzlich Vorrang vor einem regelmäßigen Reinigungsturnus haben soll. Denn einem Kühlen ist in der Regel ein Reinigen vorausgegangen und ein wiederholtes Reinigen würde daher lediglich den Aufwand erhöhen und die Leistung der Kälteanlage reduzieren.

Dadurch, dass bei im zweiten Betriebsmodus ein Erfüllt-sein einer Bedingung zum Aktivieren des ersten Betriebsmodus nicht zu einer Aktivierung des ersten Betriebsmodus führt, kann eine besonders große Kühlleistung der Kälteanlage sowie ein besonders stetiges und effektives zusätzlich Kühlen erzielt werden.

Im Folgenden werden einzelne Abläufe anhand des Ausführungsbeispiels exemplarisch näher erläutert.

Bei normalen Umgebungstemperaturen wird der Betrieb der Kälteanlage lediglich zu den voreingestellten Reinigungszeitpunkten für einen kurzen Reinigungslauf unterbrochen, wobei jedes Schwenkrohr 7 mit zwei Düsen 9 ausgestattet nacheinander für eine Schwenkzeit unter der Lamellenfläche 12 einmal hin- und herschwenken, um Schmutz mit einem Wasserstrahl zu lösen.

Steigt die Kältemittelrücklauftemperatur zum Beispiel auf über 48 °C und liegt gleichzeitig eine Außentemperatur von über 32 °C vor, so wird der zweite Betriebsmodus zum zusätzlichen Kühlen aktiviert, wobei ein Reinigungslauf vorangestellt wird, um zu verhindern, dass beim zusätzlichen Kühlen Schmutz gelöst und in die Lamellen 4 gesaugt wird.

Fällt die Umgebungstemperatur für 48 Stunden durchgängig unter 3 °C, so wird das gesamte Wasser des Rohrleitungssystems zum Frostschutz durch Schließen des Zuleitungsventils 23 und Öffnen des Entleerungsventils 25 abgelassen. Steigt die Umgebungstemperatur wieder an und liegt für 48 Stunden durchgängig über 10 °C, so wird das Rohrleitungssystem durch Schließen des Entleerungsventils 25 und Öffnen des Zuleitungsventils 23 wieder gefüllt. Erst dann kann wieder gereinigt oder zusätzlich gekühlt werden.

## Patentansprüche

1. Flüssigkeitsfreigabevorrichtung (15) für einen luftgekühlten Wärmetauscher, insbesondere Verflüssiger (1), einer Kälteanlage mit mindestens zwei Austrittsöffnungen (9) zur Freisetzung einer Flüssigkeit, insbesondere Wasser, und einer Flüssigkeitszufuhr (19), die zu jeder der mindestens zwei Austrittsöffnungen (9) mittels Austrittventile (18) abstellbar ist, wobei eine Steuerungseinrichtung (20) so eingerichtet ist, dass ein erster Betriebsmodus mit einer kleinen Anzahl gleichzeitig geöffneter Austrittsventile (18) und ein zweiter Betriebsmodus mit einer großen Anzahl gleichzeitig geöffneter Austrittsventile (18) vorgesehen ist, **dadurch gekennzeichnet, dass** die Flüssigkeitsfreigabevorrichtung (15) so eingerichtet ist, dass durch Öffnen und Schließen von Austrittsventilen (18) die Anzahl der gleichzeitig geöffneten Austrittsventilen (18) bei dem ersten Betriebsmodus zum Reinigen von Lamellen (4) der Kälteanlage durch ein Spritzen mit der Flüssigkeit unter hohem Druck und beim zweiten Betriebsmodus zum zusätzlichen Kühlen der Lamellen (4) durch ein Sprühen mit der Flüssigkeit unter niedrigem Druck durch dieselben Flüssigkeitsaustritte (7) angepasst ist.

2. Flüssigkeitsfreigabevorrichtung (15) nach dem vorhergehenden Anspruch, **dadurch gekennzeichnet, dass** sämtliche Flüssigkeitsaustritte (7), welche die Austrittsöffnungen (9) aufweisen, an dieselbe Flüssigkeitszufuhr (19) angeschlossen sind.

3. Flüssigkeitsfreigabevorrichtung (15) nach dem vorhergehenden Anspruch, **gekennzeichnet durch** einen konstanten Druck oder zumindest einem während des Betriebs nicht durch die Flüssigkeitsfreigabevorrichtung gezielt veränderten Druck der Flüssigkeitszufuhr (19).

4. Flüssigkeitsfreigabevorrichtung (15) nach einem der drei vorhergehenden Ansprüche, **gekennzeichnet durch** eine Steuerungseinrichtung (20), die so eingerichtet ist, dass durch ein Aktivieren des ersten oder zweiten Betriebsmodus ein Austrittsventil (18) nur für eine vorgegebene Zeitdauer eine Stellung gemäß dem ersten bzw. zweiten Betriebsmodus einnimmt.

5. Flüssigkeitsfreigabevorrichtung (15) nach einem der vier vorhergehenden Ansprüche, **gekennzeichnet durch** eine Steuerungseinrichtung (20), die so eingerichtet ist, dass im ersten Betriebsmodus und zweiten Betriebsmodus sämtliche Austrittsventile (18) zum Teil gleichzeitig und/oder nacheinander jeweils für eine vorgegebene Zeitdauer geöffnet werden.

6. Flüssigkeitsfreigabevorrichtung (15) nach dem vorhergehenden Anspruch, **dadurch gekennzeichnet, dass** die vorgegebene Zeitdauer einer einfachen oder Vielfachen einer Schwenkzeit zum Vorschwenken und Zurückschwenken eines Flüssigkeitsaustritts (7) entspricht.

7. Flüssigkeitsfreigabevorrichtung (15) nach einem der sechs vorhergehenden Ansprüche, **gekennzeichnet durch** eine Steuerungseinrichtung (20), die so eingerichtet ist, dass ein Flüssigkeitsaustrittsventil (18), ein Zulaufventil (23) zum Abstellen der Flüssigkeitszufuhr (19) und/oder ein Entleerungsventil (25) zum Entleeren der Flüssigkeit separat geöffnet oder geschlossen werden können und/oder separat in Abhängigkeit von einer Zeitgröße und/oder einer Messgröße geöffnet oder geschlossen werden können.

8. Flüssigkeitsfreigabevorrichtung (15) nach einem der sieben vorhergehenden Ansprüche, **gekennzeichnet durch** einen Kältemittelrücklauftemperatursensor (21) am Kältemittelrücklaufrohr (3) für ein Ermitteln einer Kältemittelrücklauftemperatur als Messgröße und/oder einen Außentemperatursensor (22) für ein Ermitteln einer Außentemperatur als Messgröße und/oder ein Zeitmessgerät für ein Ermitteln eines Zeitpunkts, ausgedrückt in Kalenderjahr, Kalendermonat, Kalendertag, Stunden, Minuten und Sekunden ab Mitternacht eines Tages im Kalendersystem sowie für ein Ermitteln einer Zeitspanne.

9. Flüssigkeitsfreigabevorrichtung (15) nach einem der acht vorhergehenden Ansprüche, **gekennzeichnet durch** eine Steuerungseinrichtung (20), die so eingerichtet ist, dass bei Überschreiten einer vorgegebenen Kältemittelrücklauftemperatur und/oder bei Überschreiten einer bestimmten Außentemperatur, vorzugsweise größer als 28°C, bevorzugt größer als 32°C, automatisch der zweite Betriebsmodus aktiviert wird.

10. Flüssigkeitsfreigabevorrichtung (15) nach einem der neun vorhergehenden Ansprüche, **gekennzeichnet durch** eine Steuerungseinrichtung (20), die so eingerichtet ist, dass bei einer Aktivierung des zweiten Betriebsmodus stets zunächst der erste Betriebsmodus aktiviert wird.

11. Kälteanlage mit einer Flüssigkeitsfreigabevorrichtung (15) nach einem der vorhergehenden Ansprüchen und einem luftgekühlten Wärmetauscher, insbesondere Verflüssiger (1), welcher ein Kältemittelrohr (8) für ein Durchströmen eines Kältemittels (26) und mit dem Kältemittelrohr (8) verbundene Lamellen (4) umfasst, wobei die Flüssigkeitsfreigabevorrichtung (15) mindestens zwei Austrittsöffnungen (9) zur Freisetzung einer Flüssigkeit, insbesondere Wasser, in Richtung der Lamellen (4) des Wärmetauschers umfasst, wobei eine Flüssigkeitszufuhr (19) zu jeder der mindestens zwei Austrittsöffnungen (9) mittels Austrittventile (18) abstellbar ist, wobei eine Steuerungseinrichtung (20) so eingerichtet ist, dass ein erster Betriebsmodus mit einer kleinen Anzahl gleichzeitig geöffneter Austrittsventile (18) und ein zweiter Betriebsmodus mit einer großen Anzahl gleichzeitig geöffneter Austrittsventile (18) vorgesehen ist, **dadurch gekennzeichnet, dass** die Flüssigkeitsfreigabevorrichtung (15) so eingerichtet ist, dass durch Öffnen und Schließen von Austrittsventilen (18) die Anzahl von gleichzeitig geöffneten Austrittsventilen (18) entweder zum Reinigen der Lamellen (4) durch ein Spritzen mit der Flüssigkeit unter hohem Druck oder zum zusätzlichen Kühlen der Lamellen (4) durch ein Sprühen mit der Flüssigkeit unter niedrigem Druck durch dieselben Flüssigkeitsaustritte (7) angepasst ist.

12. Kälteanlage nach dem vorhergehenden Anspruch, **dadurch gekennzeichnet, dass** sämtliche Flüssigkeitsaustritte (7), weiche die Austrittsöffnungen (9) aufweisen, an dieselbe Flüssigkeitszufuhr (19) angeschlossen sind.

13. Kälteanlage nach dem vorhergehenden Anspruch, **gekennzeichnet durch** einen konstanten Druck oder zumindest einem während des Betriebs nicht durch die Flüssigkeitsfreigabevorrichtung gezielt veränderten Druck der Flüssigkeitszufuhr (19).

14. Kälteanlage nach dem vorhergehenden Anspruch, **dadurch gekennzeichnet, dass** ein schwenkbarer Flüssigkeitsaustritt (7), vorzugsweise in Form eines Schwenkrohrs (7) ausgestaltet, schwenkbar ist, derart, dass der schwenkbare Flüssigkeitsaustritt (7) eine Schwenkbewegung ausführen kann und/oder ein zumindest überwiegender Teil einer dem Flüssigkeitsaustritt (7) bzw. den Flüssigkeitsaustritten (7) zugewandten Lamellenfläche (12) der Lamellen (4) des Wärmetauschers durch die Schwenkbewegung und/ oder der Unterseite übergedeckt wird.

15. Verfahren, bei dem eine Flüssigkeitsfreigabevorrichtung (15) für einen luftgekühlten Wärmetauscher einer Kälteanlage gemäß einem der vorhergehenden Ansprüche mit mindestens zwei Austrittsöffnungen (9) zur Freisetzung einer Flüssigkeit und einer Flüssigkeitszufuhr (19) zu jeder der mindestens zwei Austrittsöffnungen (9) mittels Austrittventile (18) abstellbar ist, wobei eine Steuerungseinrichtung (20) so eingerichtet ist, dass ein erster Betriebsmodus mit einer kleinen Anzahl gleichzeitig geöffneter Austrittsventile (18) und ein zweiter Betriebsmodus mit einer großen Anzahl gleichzeitig geöffneter Austrittsventile (18) vorgesehen ist, **dadurch gekennzeichnet, dass** durch Öffnen und Schließen von Austrittsventilen (18) die Anzahl der gleichzeitig geöffneten Austrittsventile (18) bei dem ersten Betriebsmodus zum Reinigen von Lamellen (4) der Kälteanlage durch ein Spritzen mit der Flüssigkeit unter hohem Druck und beim zweiten Betriebsmodus zum zusätzlichen Kühlen der Lamellen (4) durch ein Sprühen mit der Flüssigkeit unter niedrigem Druck durch dieselben Flüssigkeitsaustritte (7) angepasst wird.

## Claims

1. Liquid release device (15) for an air-cooled heat exchanger, in particular condenser (1), a refrigeration system having at least two outlet openings (9) for releasing a liquid, in particular water, and a liquid supply (19), which can be deactivated to each of the at least two outlet openings (9) by means of outlet valves (18), wherein a control device (20) is configured such that a first operating mode with a small number of outlet valves (18) opened simultaneously and a second operating mode with a large number of outlet valves (18) opened simultaneously is provided, **characterized in that** the liquid release device (15) is arranged such that by opening and closing outlet valves (18), the number of outlet valves (18) opened simultaneously in the first operating mode is adapted to clean the lamellae (4) of the refrigeration system by splashing with the liquid under high pressure and in the second operating mode to additionally cool the lamellae (4) by a spraying with the liquid under low pressure by the same liquid outlets (7).

2. Liquid release device (15) according to the preceding claim, **characterized in that** all liquid outlets (7) which have the outlet openings (9) are connected to the same liquid supply (19).

3. Liquid release device (15) according to the preceding claim, **characterized by** a constant pressure or at least a pressure of the liquid supply (19) which is not selectively modified during the operation by the liquid release device.

4. Liquid release device (15) according to one of the three preceding claims, **characterized by** a control device (20) arranged such that by activating the first or second operating mode an outlet valve (18) takes a position according to the first or second operating mode only for a predetermined time.

5. Liquid release device (15) according to one of the four preceding claims, **characterized by** a control device (20) which is configured such that in the first operating mode and second operating mode all outlet valves (18) are partially opened simultaneously and/or successively for a predetermined time in each case.

6. Liquid release device (15) according to the preceding claim, **characterized in that** the predetermined time corresponds to a single or multiple pivoting time for pivoting a liquid outlet (7) forward and backward.

7. Liquid release device (15) according to one of the six preceding claims, **characterized by** a control device (20) which is arranged such that a liquid outlet valve (18), an inlet valve (23) for stopping the liquid supply (19) and/or a drain valve (25) for draining the liquid can be opened or closed separately and/or can be opened or closed separately in dependence on a time variable and/or a measured variable.

8. Liquid release device (15) according to one of the seven preceding claims, **characterized by** a refrigerant return temperature sensor (21) on the refrigerant return tube (3) for a determination of a refrigerant return temperature as measured variable and/or an outside temperature sensor (22) for a determination of an outside temperature as measured variable and/or a timing device for a determination of an instant of time, expressed in calendar year, calendar month, calendar day, hours, minutes and seconds from midnight of a day in the calendar system as well as for a determination of a time interval.

9. Liquid release device (15) according to one of the eight preceding claims, **characterized by** a control device (20) which is arranged such that when exceeding a predetermined refrigerant return temperature and/or when exceeding a specific outdoor temperature, preferably higher than 28 °C, preferably higher than 32 °C, the second operating mode is automatically activated.

10. Liquid release device (15) according to one of the nine preceding claims, **characterized by** a control device (20) which is arranged such that when the second operating mode is activated, the first operating mode is always activated first.

11. Refrigeration system with a liquid release device (15) according to one of the preceding claims and an air-cooled heat exchanger, in particular a condenser (1), comprising a refrigerant tube (8) for a flow through of a refrigerant (26), and lamellae (4) connected to the refrigerant tube (8), wherein the liquid release device (15) comprises at least two outlet openings (9) for releasing a liquid, in particular water, in direction of the lamellae (4) of the heat exchanger, wherein a liquid supply (19) to each of the at least two outlet openings (9) can be deactivated by means of outlet valves (18), wherein a control device (20) is arranged such that a first operating mode with a small number of outlet valves (18) opened simultaneously and a second operating mode with a large number of outlet valves (18) opened simultaneously is provided, **characterized in that** the liquid release device (15) is configured in such that by opening and closing outlet valves (18), the number of outlet valves (18) opened simultaneously is adapted either to clean the lamellae (4) by a splashing with the liquid under high pressure or to additionally cool the lamellae (4) by a spraying with the liquid under low pressure through the same liquid outlets (7).

12. Refrigeration system according to the preceding claim, **characterized in that** all liquid outlets (7) having the outlet openings (9) are connected to the same liquid supply (19).

13. Refrigeration system according to the preceding claim, **characterized by** a constant pressure or at least a pressure of the liquid supply (19) which is not selectively modified during the operation by the liquid release device.

14. Refrigerating system according to the preceding claim, **characterized in that** a pivotable liquid outlet (7), preferably arranged in the form of a pivot tube (7), is pivotable in such that the pivotable liquid outlet (7) can execute a pivoting movement and/or an at least predominant part of a lamella surface (12) of the lamellae (4) of the heat exchanger facing the liquid outlet (7) or the liquid outlets (7) is covered by the pivoting movement and/ or the underside.

15. Method in which a liquid release device (15) for an air-cooled heat exchanger of a refrigeration system according to one of the preceding claims with at least two outlet openings (9) for releasing a liquid and a liquid supply (19) which can be deactivated to each of the at least two outlet openings (9) by means of outlet valves (18), wherein a control device (20) is configured such that a first operating mode with a small number of outlet valves (18) opened simultaneously and a second operating mode with a large number of outlet valves (18) opened simultaneously is provided, **characterized in** by opening and closing outlet valves (18), the number of outlet valves (18) opened simultaneously in the first operating mode is adapted to clean the lamellae (4) of the refrigeration system by a splashing with the liquid under high pressure and in the second operating mode to additionally cool the lamellae (4) by a spraying with the liquid under low pressure by the same liquid outlets (7).

## Revendications

1. Dispositif de libération de liquide (15) pour un échangeur de chaleur refroidi par air, en particulier un condenseur (1), d'un système frigorifique comportant au moins deux ouvertures de sortie (9) pour libérer un liquide, en particulier de l'eau, et une alimentation de liquide (19), qui peut être désactivée de manière centralisée à chacune des au moins deux ouvertures de sortie (9) au moyen de soupapes de sortie (18), un dispositif de commande (20) étant configuré de telle sorte qu'un premier mode de fonctionnement avec un faible nombre de soupapes de sortie (18) ouvertes simultanément et un second mode de fonctionnement avec un grand nombre de soupapes de sortie (18) ouvertes simultanément est agencé, **caractérisé en ce que** le dispositif de libération de liquide (15) est agencé de telle sorte que, par l'ouverture et la fermeture de soupapes de sortie (18), le nombre de soupapes de sortie (18) ouvertes simultanément dans le premier mode de fonctionnement est adapté pour nettoyer les lamelles (4) de l'installation frigorifique par pulvérisation avec le liquide sous haute pression et dans le second mode de fonctionnement pour le refroidissement supplémentaire des lamelles (4) par pulvérisation avec le liquide sous pression basse par les mêmes sorties liquides (7) par ouverture et fermeture des soupapes de sortie (18).

2. Dispositif de libération de liquide (15) selon la revendication précédente, **caractérisé en ce que** toutes les sorties de liquide (7) qui sont inclues dans les ouvertures de sortie (9) sont reliées à la même alimentation de liquide (19).

3. Dispositif de libération de liquide (15) selon la revendication précédente, **caractérisé par** une pression constante ou au moins une pression de l'alimentation de liquide (19) qui n'est pas modifiée sélectivement en fonctionnement par le dispositif de libération de liquide.

4. Dispositif de libération de fluide (15) selon l'une des trois revendications précédentes, **caractérisé par** des moyens de commande (20) agencés de telle sorte que, en activant le premier ou le second mode de fonctionnement, une soupape de sortie (18) ne prenne une position selon le premier ou le second mode de fonctionnement que pendant une durée prédéterminée.

5. Dispositif de libération de liquide (15) selon l'une des quatre revendications précédentes, **caractérisé par** un dispositif de commande (20) qui est configuré de telle sorte que, dans le premier mode de fonctionnement et dans le second mode de fonctionnement, toutes les soupapes de sortie (18) sont partiellement ouvertes simultanément et/ou successivement pendant une durée prédéterminée dans chaque cas.

6. Dispositif de libération de liquide (15) selon la revendication précédente, **caractérisé en ce que** la durée prédéterminée correspond à un temps de pivotement unique ou multiple pour faire pivoter une sortie de liquide (7) vers l'avant et l'arrière.

7. Dispositif de libération de liquide (15) selon l'une des six revendications précédentes, **caractérisé par** un dispositif de commande (20) qui est agencé de telle sorte qu'une soupape de sortie de liquide (18), une porte d'entrée (23) pour arrêter l'alimentation de liquide (19) et/ou une soupape de vidange (25) pour vider le liquide peuvent être ouvertes ou fermées séparément et/ou peuvent être ouvertes ou fermées séparément selon un calendrier et/ou une échelle de mesure.

8. Dispositif de libération de liquide (15) selon l'une des sept revendications précédentes, **caractérisé par** un capteur de température de retour de réfrigérant (21) sur la conduite de retour de réfrigérant (3) pour déterminer une température de retour de réfrigérant comme critère de mesure et/ou un capteur de température de déviation (22) pour déterminer une température de déviation comme critère de mesure et/ou un dispositif temporel pour déterminer un instant, exprimé par année civile, mois civil, jour civil, heures, minutes et secondes à partir de minuit du jour dans le système de calendrier et pour déterminer un intervalle de temps.

9. Dispositif de libération de liquide (15) selon l'une des huit revendications précédentes, **caractérisé par** un dispositif de commande (20) qui est agencé de telle sorte que le second mode de fonctionnement est automatiquement activé lorsque la température de fonctionnement dépasse une température de retour de réfrigérant prédéterminée et/ou lorsque la température de fonctionnement dépasse une température extérieure spécifique, de préférence supérieure à 28 °C et de préférence supérieure à 28 °C.

10. Dispositif de libération de liquide (15) selon l'une des neuf revendications précédentes, **caractérisé par** un dispositif de commande (20) qui est configuré de telle sorte que, lors de l'activation du deuxième mode de fonctionnement, le premier mode de fonctionnement est toujours activé en premier.

11. Installation frigorifique comprenant un dispositif de libération de liquide (15) selon l'une des revendications précédentes et un échangeur de chaleur refroidi par air, en particulier un condenseur (1), comprenant un tube réfrigérant (8) pour faire passer un réfrigérant (26), et des lamelles (4) reliées au tube réfrigérant (8), dans laquelle le dispositif de libération de liquide (15) comprend au moins deux ouvertures de sortie (9) pour libérer un liquide, en particulier de l'eau, dans la direction des lamelles (4) de l'échangeur de chaleur, dans laquelle une alimentation de liquide (19) à chacune des au moins deux ouvertures de sortie (9) peut être arrêtée au moyen de soupapes de sortie (18), un dispositif de commande (20) étant agencé de sorte qu'un premier mode de fonctionnement avec un faible nombre de soupapes de sortie (18) ouvertes simultanément et un second mode de fonctionnement avec un grand nombre de soupapes de sortie (18) ouvertes simultanément est agencé, **caractérisé en ce que** le dispositif de libération de liquide (15) est configuré de telle manière, **en ce qu'**en ouvrant et en fermant des soupapes de sortie (18), le nombre de soupapes de sortie (18) ouvertes simultanément est adapté soit pour nettoyer les lamelles (4) en pulvérisant le liquide sous haute pression, soit pour refroidir en outre les lamelles (4) en pulvérisant le liquide sous basse pression par les mêmes sorties de liquide (7).

12. Installation frigorifique selon la revendication précédente, **caractérisé en ce que** les mêmes sorties de liquide (7) ayant les ouvertures de sortie (9) sont reliées à la même alimentation de liquide (19).

13. Installation frigorifique selon la revendication précédente, **caractérisée par** une pression constante ou au moins une pression de l'alimentation de liquide (19) qui n'est pas modifié pendant le fonctionnement de façon ciblée par le dispositif de libération de liquide.

14. Installation frigorifique selon la revendication précédente, **caractérisé en ce qu'**une sortie de liquide pivotante (7), de préférence sous la forme d'un tube pivotant (7), peut pivoter de telle sorte que la sortie de liquide pivotante (7) peut exécuter un mouvement de pivotement et/ou une partie au moins majeure d'une surface lamellaire des lamelles (4) de l'échangeur de chaleur faisant face à la sortie de liquide (7) ou aux sorties de liquide (19), respectivement, est recouverte par le mouvement de pivotement et/ou la face inférieure.

15. Procédé dans lequel un dispositif de libération de liquide (15) pour un échangeur de chaleur refroidi par air d'une installation frigorifique selon l'une des revendications précédentes avec au moins deux ouvertures de sortie (9) pour libérer un liquide et une alimentation de liquide (19) débouchant sur chacune des au moins deux ouvertures de sortie (9) peut être arrêté moyennant des soupapes de sortie (18), dans lequel un moyen de commande (20) est agencé pour créer un premier mode de fonctionnement avec un petit nombre de soupapes de sortie (18) ouvertes simultanément et un second mode de fonctionnement avec un grand nombre de soupapes de sortie (18) ouvertes simultanément, **caractérisé en ce que** par l'ouverture et la fermeture de soupapes de sortie (18), le nombre de soupapes de sortie (18) ouvertes simultanément est ajusté par leur ouverture et leur fermeture dans le premier mode de fonctionnement pour le nettoyage des lamelles (4) de l'installation frigorifique par pulvérisation avec le liquide sous haute pression et dans le second mode de fonctionnement pour le refroidissement supplémentaire des lamelles (4) par pulvérisation avec le liquide sous basse pression par les mêmes sorties de liquide (7).
